Europäisches Patentamt

European Patent Office

Office européen des brevets

(11) Publication number: **0 196 663**

**B1**

(12) **EUROPEAN PATENT SPECIFICATION**

(45) Date of publication of patent specification: **28.02.90**

(21) Application number: **86104486.5**

(22) Date of filing: **02.04.86**

(51) Int. Cl.⁵: **G 03 B 27/34**

(54) A method and an apparatus for expanding magnification range of a photographic projector.

(30) Priority: **03.04.85 JP 69067/85**

(43) Date of publication of application:
**08.10.86 Bulletin 86/41**

(45) Publication of the grant of the patent:
**28.02.90 Bulletin 90/09**

(84) Designated Contracting States:
**DE GB IT**

(56) References cited:
**US-A-2 303 920**
**US-A-2 418 230**
**US-A-3 832 058**

(73) Proprietor: **Dainippon Screen Mfg. Co., Ltd.**
**1-1, Tenjinkitamachi Teranouchi-Agaru 4-chome**
**Horikawa-Dori**
**Kamikyo-ku Kyoto 602 (JP)**
(73) Proprietor: **KABUSHIKI KAISHA SHASHIN KOGYO**
**598, Yodonamazu-cho Fushimi-ku**
**Kyoto-shi Kyoto-fu (JP)**

(72) Inventor: **Kitai, Makoto**
**35, Minamifunaoka-cho Murasakino**
**Kita-ku Kyoto-shi Kyoto-fu (JP)**
Inventor: **Omori, Takashi 27-1, Isshiki-cho**
**No. 9-8, Wakakusa 3-chome**
**Kusatsu-shi Shiga-Ken (JP)**

(74) Representative: **WILHELMS, KILIAN & PARTNER**
**Patentanwälte**
**Eduard-Schmid-Strasse 2**
**D-8000 München 90 (DE)**

Courier Press, Leamington Spa, England.

## Description

The present invention relates to a photographic projector, and particularly relates to such a photographic projector that reproduces a color print of a relatively large original color picture film on a printing paper by projecting exposure light at a desired magnification.

In general an apparatus for projecting exposure light on a printing paper has been publicly known as a photograph enlarger, and for example, in an apparatus applied to produce a reproduced picture image of relatively large color picture original film, of, for example, a size of 4×5 inches (102×127 mm), there have been used constructions similar to those of a process camera which has being used in the field of plate printing.

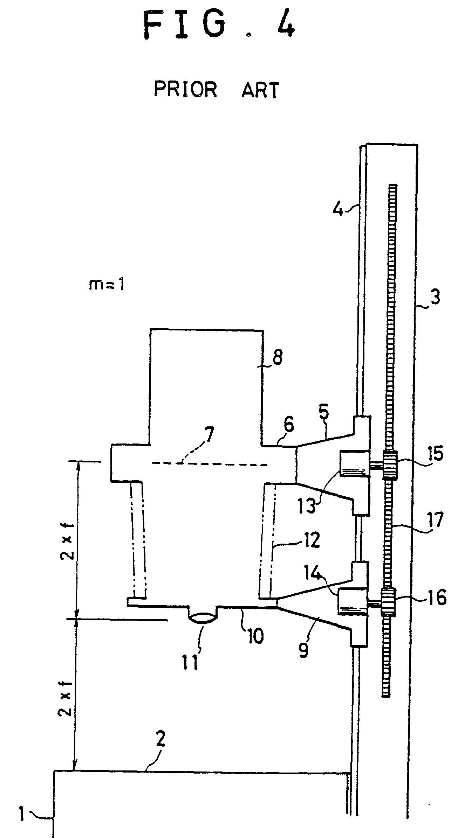

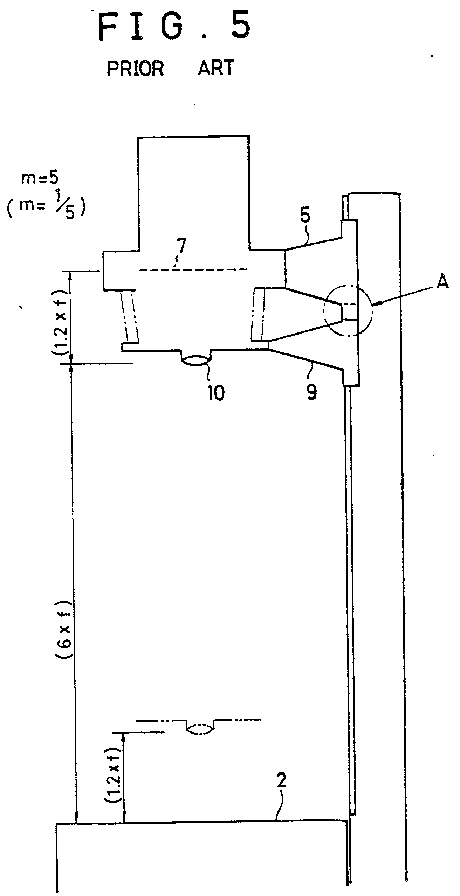

For example, each of the apparatuses shown in Fig. 4 and 5 is an example of an upright type photographic projector in which a support 3 is erected at a rear surface 4 of a lower frame 1 which is provided with an easel 2 on the upper surface. An original picture holder base 5 which holds an original picture holder 6 is mounted so as to be movable in the vertical direction along a guide rail 4 which is fitted to an appropriate position of the support 3. On the original picture holder 6, an original film 7 (hereinafter, refer to "original picture") is disposed at a predetermined position, and further a lamp house 8 for accommodating a light source (not shown) for projecting the original picture 7 is provided.

Under the original picture holder 6 there is also provided a lens holder 9 which holds a lens supporting plate 10. The lens holder 9 is also movable in the vertical direction along the guide rail 4, and at the center of the lens supporting plate 10 there is secured a lens 11 for focusing the light from the light source. Between the original picture holder 6 and the lens supporting plate 10 there is provided a bellows 12 for shielding the light.

In addition, to each of the original picture holder base 5 and the lens holder 9 there is attached a rotary encoder 13 and 14, respectively. By engaging gears 15 and 16 secured to their axes with a rack 17 erected vertically on the support 3, the original picture holder 6 and/or the lens supporting plate 10 are moved, and when it (they) moves, pulses are generated according to the distance it (they) moved. Thus, by counting the number of these pulses, positions of the original picture holder 6 and the lens holder 10 are controlled, and basing on results of calculations carried out by appropriate operational means, positions at which the original picture holder 6 and the lens supporting plate 10 are to be located are controlled so as to furnish a magnification, and a picture image of desired magnification is focused. Operations regarding the positions of the frames corresponding to a desired magnification value are performed based on the publicly known lens equation, as follows:

$$1/a + 1/b = 1/f, \quad m = b/a$$
$$a = f \times (1 + m)$$
$$b = f \times 1/(1 + m)$$

Here,

a: distance between the original picture and the lens (original picture distance)

b: distance between the lens and the focusing plane (picture image distance)

f: focal distance of the lens

m: magnification

As described above, when the magnification [m] is obtained from the size of the original picture and that of the desired reproduction picture, positions at which the original picture holder 6 and a lens supporting plate 10 are to be located can be calculated. For example, in the case of the magnification being [1:1], as shown in Fig. 4, "original picture distance a" and "picture image distance b" each becomes [2×f].

However, the range of magnification that can be set in this kind of photographic projector is limited to within a range which is impressed by the mechanism of the apparatus. For example, in Fig. 5, there is shown a state in which the magnification of the apparatus shown in Fig. 4 is set to [5:1]. As shown by an arrow mark [A], the lower end portion of the base 5 of the original picture holder and the upper edge portion of the base of the lens holder 9 are overlapped at the identified portion. Therefore, in this practically used apparatus this state cannot be reached since the two holders collide before, so that in this apparatus the magnifications that can be set are confined to less than 5 times.

In view of the foregoing, conventionally there have been proposed various means for realizing a photographic projector having a large projecting magnification.

At first, there is a means in which the shapes of the base of the original picture holder and of the base of the lens holder are appropriately modified so that they can approach more closely than originally. For example, the under surface of the base of the original picture holder and the upper surface of the base of the lens holder are flattened so that the original picture holder and the lens holder may approach to a position at which they can nearly contact each other.

However, when the size of each of the bases in the vertical direction becomes excessively small, the frames are held unstably, so that the sizes of the bases can not be made smaller than a certain value, and a reduced size for flattening one plane must be compensated at the reverse side of each of the bases, resulting in inconvenience in other respects. That is, if the base of the original picture holder is extended upwards, the height of the supporting rod must be increased to the same extent, and in addition, if the base of the lens holder is extended downwards, in the case of the original picture being reductively projected as shown by two dots line in Fig. 5, the base of the lens holder may be a barrier for approaching the lens holder to an easel plane, so that there are some cases in which a desired picture image focal distance can not be obtained.

As another means for allowing the original picture holder to approach the lens holder more closely, the base of the lens holder is made narrower than the base of the original picture holder, they are adapted to be moved along individually different guide rails, and the base of the lens holder is entered into the inside of the base of the original picture holder. However, in this mean two sets of guide rails are necessary, which results in an increased consumption of materials, an increased number of assemblies etc. Thus, this means tends to become expensive.

There is known another means for allowing the original picture holder and the lens holder to approach each other more closely, in which adapters, a so called "convex cone" and "concave cone", are used. In this means, a small seat plate is detachably mounted on the central portion of the lens supporting plate, and usually the lens is equipped with this small seating plate. In a case of large magnification projection where otherwise the base of the original picture would collide with that of the lens holders, the small seating plate is replaced by cup-shaped concave cone, that is, a cone the central portion of which is concave is fixed to the lens seating plate, the lens being attached to the bottom of the concave cone. As, by this means, the original picture can be approached more closely to the lens than in the case of the standard seating plate, a focused picture image having a larger magnification is obtainable. If a reduced magnification is required, the convex cone is applied.

In the means which uses such an adapter there is no necessity for applying any particular modification to the original picture holder and the lens holder, but only the lens seating plate has to be modified, so that such means can be realized relatively easily. However, the position at which the lens is fixed differs from that of the case in which the standard seating plate is used, so that when the lens is to be focused, the difference must be compensated. Particularly, in a type of apparatus which is provided with an auto focusing means as shown in Fig. 4, because the auto focusing means is adapted to control the position of the lens holder according to the number of pulses generated by a rotary encoder 14, the lens comes to be out of focus, if the fixing position of the lens on the lens holder is changed. Accordingly, in order to compensate this difference in position it is necessary to discriminate operation data according to the case in which the adapter is used and the case in which the adapter is not used. This is quite inconvenient.

In addition, in practical use, the standard seating plate and the concave cone or the convex cone must be exchanged, according to the desired magnification value, requiring troublesome work every time for attaching the lens to these members.

A photographic projector according to the preamble of claim 1 and a method of focusing a photographic projector according to the preamble of claim 5 are known from US—A—2 418 230 disclosing an automatically focused projector in which the position of the imaging lens can be modified to adapt the position to different focal lengths thereof.

In view of the previously described problems found in the prior art, it is an object of the invention to provide a simple solution for expanding the range of the reproduction magnification of a photographic projector.

This object is accomplished by the photographic projector as claimed in claim 1 and the method of focusing a photographic projector as claimed in claim 5.

In the case of applying the present invention to an auto focus type photographic projector, a means for generating pulse signals according to the amount of movement of the lens is attached to the driving means. The pulse signals are associated with pulse signals generated on the basis of the movement of the lens frame base, and by controlling the position of the lens as a whole auto focusing can be realized.

In the present invention since sufficient sizes are given to the base of the original picture holder and the base of the lens holder to maintain accuracy of the original picture holder and the lens holder, and the projecting lens may be moved up to positions of the original picture or of the picture image, corresponding to the desired magnification, the range of projection magnification can be quite rationally enlarged.

A preferred embodiment of the invention is now described with reference to the accompanying drawings, in which:

Fig. 1 is a side sectional view showing the main part of an embodiment of the present invention;

Fig. 2 is a plan sectional view cut along II—II line shown in Fig. 1;

Fig. 3 is a flow chart explaining operation of the embodiment of the present invention;

Figs. 4 and 5 are schematic views of a conventional apparatus.

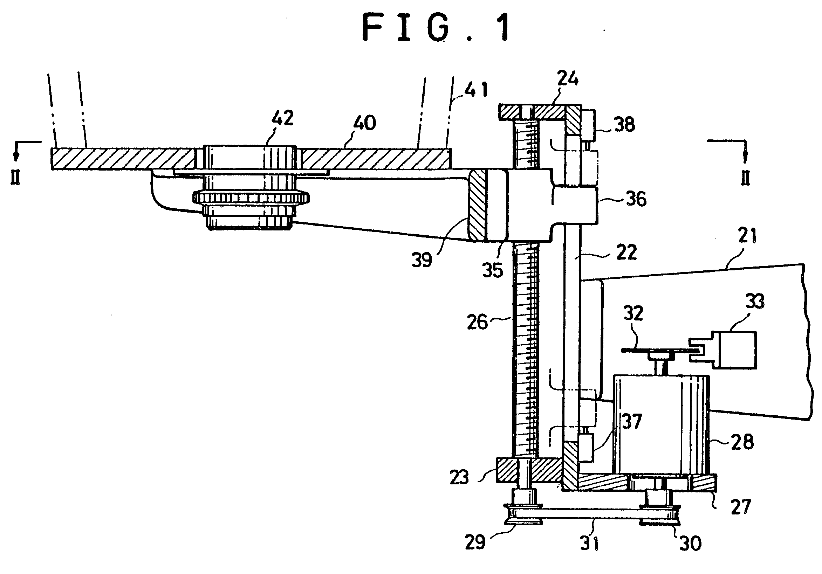

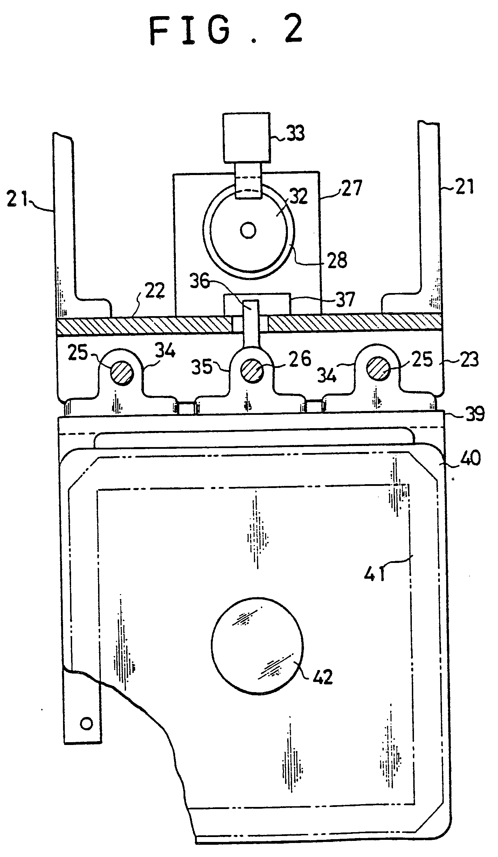

Fig. 1 is a side sectional view showing the main part of an embodiment of an apparatus according to the present invention, and Fig. 2 is a plan sectional view cut along II—II line in the apparatus shown in Fig. 1.

At the top end (not shown) of a pair of brackets 21 erected on the base of the lens holder a supporting plate 22 is securely mounted. At the upper and the lower ends of the front plane of the afore-mentioned supporting plate 22 two bearing plates 23 and 24 are mounted, and by means of these two bearing plates 23 and 24, a pair of guide bars 25 and 25 are securely maintained in the direction parallel to the optical axis, and at the central portion a screw rod 26 for driving the lens seating plate or lens setting plate is rotatably mounted. The lower end of the screw rod 26 penetrates the lower bearing plate 23 and extends downwardly. At the lower end of the screw rod a pulley 29 is provided. At the lower part of the rear of the supporting plate 22 a motor installing plate 27 extending rearwardly is mounted on which a motor 28 is installed.

A shaft of the motor 28 extends to the underside of the installing plate 27 and at the lower end of the shaft there is provided a pulley 30. A timing belt 31 is stretched between said two pulleys 29 and 30, and the screw rod 26 is driven by the motor 28. The shaft of the motor 28 projects to the rear side of the pulley 30. A rotary plate 32 and a detector 33 which are mounted on the shaft compose together with the shaft a rotary encoder which generates pulses the number of which corresponds to an amount of rotation of the motor 28. The rotary encoder may be well known devices such as a photoelectric type which comprises, for example, a rotary plate which is formed so as to provide light transparent portions and light interrupting portions which are alternately located at the peripheral edge thereof, a projecting light source and a light receiving part which put the peripheral edge between themselves, or an electromagnetic type rotary encoder comprising a gear like rotary plate and a magnetic switch etc.

On each of the pair of guide bars 25 and 25 attached to the supporting plate 22 a sliding member 34 is fitted, and on the screw rod 26 a nut 35 is screwedly engaged. These sliding members and the nut are mounted on a bracket 39 having U shaped flat section, and driven to carry out descending and ascending movements by movement of the screw rod 26 which is driven by the motor 28. A projection 36 which projects rearwardly by penetrating through a slot formed at an appropriate portion of the supporting plate 22 is engaged with the nut 35. On the upper end and the lower end of the slot there are disposed limit switches 37 and 38, respectively, which stop driving of the motor 28 when the nut 35 reaches the end(s) of the stroke of the movement. A lens seating plate 40 is securely mounted to the U shape bracket 39. The lens seating plate 40 and the original picture frame 5 are connected with a bellows 41, and a projection lens 42 is fixed at the central portion of the lens seating plate 40.

The embodiment of the present invention is constructed as described above. Accordingly, when the lens holder reaches the end(s) of the stroke of the movement, only the lens seating plate is further moved in the desired direction to bring the projecting lens closer to the original picture or the plane of the easel. That is, the photographic projector can have a wider magnification range in comparison with that of the conventional photographic projector in which the lens seating plate is fixed to the lens holder. In the apparatus shown in Fig. 1, by setting up a length [l] of the stroke of the movement, assuming that the lens seating plate in the photographic projector of the conventional type in which the lens seating plate is fixed to the lens holder is located at the central point of the stroke of the movement, when the base of the lens holder reaches the end of the stroke of movement, (for example, when the base of the lens contacts the original picture holder etc.), the lens seating plate can be moved in the same direction for an additional distance of [l/2], so that it is possible to approach more closely the surface of the original picture or that of the easel. Thus, according to the present invention, the applicable magnification range is nearly same as in those cases in which said concave cone or said convex cone can be applied.

In the case of applying the present invention to a photographic projector of auto-focusing type, it is necessary to correct the positional data of the lens holder appropriately which are based on positional data of the lens 42 detected by the rotary encoder comprising the rotary plate 32 and the detector 33. That is, the focused state basing on the afore-mentioned lens formula is obtained in the case of the lens seating plate 40 being set to the standard point within the stroke of the movement along the guide rail 25. And in the case of carrying out projection with a large ratio of projection magnification or a large ratio of reduction which can not be realized by fixing the lens seating plate 40 to the standard point, so that the lens seating plate 40 has to be moved along the guide rail 25, the accurate focused state cannot be obtained only by using positional data which are based on the output pulses of the rotary encoder 13 and 14 provided on the base of the original picture frame and that of the lens holder 9 shown in Fig. 4. In order to compensate this, instead of using "original picture distance a" and "picture image distance b" in the lens formula, a sum of the positional data of each of the bases and of the variation data of the lens seating plate position relative to the base of the lens holder may be applied. That is, if an amount of movement of the lens seating plate away from the standard point is set to be [s],

(1) in the case of enlargement (expansion): original picture distance (distance from the standard point to the original picture surface)

$$a \leftarrow (a - s)$$

picture image distance (distance from the standard point to the picture image)

$$b \leftarrow (b + s)$$

(2) in the case of reduction: original picture distance

$$a \leftarrow (a + s)$$

picture image distance

$$b \leftarrow (b - s)$$

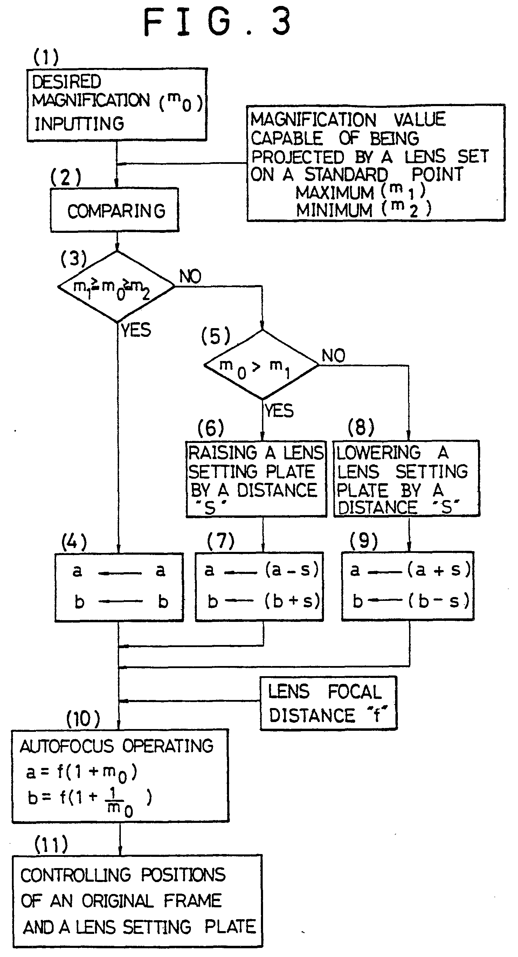

The substitution described above can be conducted, and by operating according to the substitution, an auto focusing mechanism can be actuated by applying the same operational process as it has been applied in the case where the lens seating plate 40 is disposed on the standard point. It is desired that this operational process is made so that the lens seating plate may be moved in the desired direction automatically when a magnification value which exceeds a previously determined magnification range realizable with the lens seating plate being disposed on the standard point on the basis of the focal distance of the lens and construction of the photographic projector is input to a control means. For example, by carrying out the operation process according to the flow chart shown in Fig. 3, movement of the lens seating plate and focusing can be carried out automatically. That is,

Step (1): input the desired magnification value $[m_0]$.

Step (2): compare the magnification range of $[m_1-m_2]$ which is obtainable with the lens disposed at the standard point with the magnification value $[m_0]$.

Step (3): judge whether or not the magnification value $[m_0]$ is within the range of the magnification $[m_1-m_2]$.

Step (4): in the case of the step (3) being [Yes], do not vary [a] and [b].

Step (5): in the case of the step (3) being [No], $[m_0>m_1]$ is judged.

Step (6): in the case of the step (5) being [Yes], raise the lens seating plate by a distance [s].

Step (7): replace [a] by [a−s], and [b] by [b−s], respectively.

Step (8): in the case of the step (5) being [No], lower the lens seating plate by a distance [s].

Step (9): replace [a] by [a+s], and [b] by [b−s], respectively.

Step (10): basing on the given conditions, the lens focal length [f], the steps (4) or (7) or [a] and [b] of the step (9), operate positions of the original picture holder and the lens holder for the magnification value $[m_0]$.

Step (11): move the original picture holder and the lens holder to desired position according to the result of the step (10).

The concrete example of the auto focusing mechanism at the steps (10) and (11) has been already well known, for example, it has been disclosed in the specification of the United States Patent No. 3,832,058, Japanese Patent Laid-Open Publication No. 47-3478 etc., so that descriptions therefore are abbreviated.

The present invention has the following advantages:

(1) Merely by adding a relatively simple modification to the lens holder, the photographic projector according to the present invention can have an expanded magnification range which is wider than that of the standard photographic projector in which the lens seating plate is fixed to the base of the lens holder.

(2) The photographic projector is less troublesome in mounting and removing the seating plate and the lens in comparison with the conventional standard photographic projector. In addition, according to the present invention, it is possible to prevent troublesome accidents such as lens fall or the like from occurring.

(3) By only inputting the desired magnification value $[m_0]$, the lens seating plate is moved automatically. Accordingly, there is no danger of an erroneous operation.

## Claims

1. A photographic projector, comprising:

a) an original picture holder for holding an original picture;

b) a lens holder (21) for holding a projecting lens (42), said lens holder being movable in a direction parallel to the optical axis of said lens between uppermost and lowermost positions, a lens seating plate (40) forming part of said lens holder and supporting said lens (42), said lens seating plate normally supporting said lens at a predetermined position relative to said lens holder (21) but being movable relative to said lens holder along said axis; and

c) an easel for supporting a photosensitive material in a reproduction plane, said original picture, said lens and said reproduction plane all being disposed along said optical axis; said photographic projector being characterized by providing means for determining whether or not said projector can be focused at a desired magnification with said lens seating plate (40) being located at said predetermined position, said means:

i) either moving said lens holder (21), with said lens seating plate (40) being situated at said predetermined position, and at least one of said original picture holder and said easel to the locations required to focus said projector at said desired magnification, if it is determined that said projector can be focused at the desired magnification with said lens seating plate (40) being located at the predetermined position;

ii) or moving said lens seating plate (40) relative to said lens holder (21) and moving said lens holder and at least one of said origional picture holder and said easel to focus said projector at said desired magnification if it is determined that said projector cannot be focused at a desired magnification with said lens seating plate (40) being located at the predetermined position.

2. The photographic projector of claim 1, wherein said means moves said lens seating plate (40) towards said original picture holder when a higher magnification is required.

3. The photographic projector of claim 1, wherein said means moves said lens seating plate (40) away from said original picture holder when a lower magnification is required.

4. The photographic projector of any one of claims 1, 2 and 3, wherein said means utilizes the same lens equation to determine the required locations of said original picture frame, said lens holder, said easel and said lens seating plate (40) when said lens seating plate (40) is in said predetermined position and when said lens seating plate (40) is off said predetermined position.

5. A method of focusing a photographic projector at a desired magnification in which projector an original picture holder for holding an original picture, a lens holder (21) for holding a projecting lens and an easel supporting a photosensitive material are disposed along the optical axis of said projecting lens, said lens holder being movable in a direction parallel to said optical axis between uppermost and lowermost positions, a lens seating plate (40) forming part of said lens holder and supporting said lens (42), said lens seating plate (40) normally supporting said lens (42) at a predetermined position relative to said lens holder but being movable relative to said lens holder along said axis, said method being characterized by comprising the steps of

determining whether said projector can be focused at said desired magnification with said lens seating plate (40) being located at said predetermined position; and thereafter

if the answer to said determining step is yes, moving said lens holder (21), with said lens seating plate (40) at said predetermined position, and at least one of said original picture holder and said easel to the locations required to focus said projector at said desired magnification; or

if the answer to said determining step is no, moving said lens seating plate (40) relative to said lens holder (21) and moving said lens holder and at least one of said original picture holder and said easel to the locations required to focus said projector at said desired magnification.

6. A method for focusing a photographic projector according to claim 5, wherein said lens seating plate (40) is moved towards said original picture holder when a higher magnification is required.

7. A method for focusing a photographic projector according to claim 5, wherein said lens seating plate (40) is moved away from said original picture holder when a lower magnification is required.

8. A method for focusing a photographic projector according to any one of claims 5, 6 and 7, wherein the same lens equation is used to determine the required relative positions of said lens holder, said original picture holder, said easel and said lens seating plate (40) whether the answer to said determining step is yes or no.

**Patentansprüche**

1. Photographischer Projektor mit
a) einem Bildvorlagehalter zum Halten einer Bildvorlage;
b) einem Objektivhalter (21) zum Halten eines Projektionsobjektivs (42), wobei der Objektivhalter in einer Richtung parallel zur optischen Achse des Objektivs zwischen einer obersten und einer untersten Stellung bewegbar ist, wobei eine Objektivsitzplatte (40) Teil des Objektivhalters bildet und das Objektiv (42) trägt, wobei die Objektivsitzplatte das Objektiv normalerweise in einer bestimmten Lage in Bezug auf den Objektivhalter (21) trägt, aber relativ zum Objectivhalter längs der Achse bewegbar ist, und
c) einem Gestell zur Halterung eines lichtempfindlichen Materials in einer Reproduktionsebene, wobei die Bildvorlage, das Objektiv und die Reproduktionsebene alle längs der optischen Achse angeordnet sind, wobei der photographische Projektor

gekennzeichnet ist durch das Vorsehen von Mitteln zur Feststellung, ob der Projektor mit in der bestimmten Stellung befindlicher Objektivsitzplatte (40) bei einer bestimmten Vergrößerung fokussiert werden kann oder nicht, wobei die Mittel

i) entweder bei inder bestimmten Stellung befindlicher Objektivsitzplatte (40) den Objektivhalter (21) und wenigstens einen von Bildvorlagehalter und Gestell in Stellungen bewegen, die für eine Fokussierung des Projektors bei der gewünschten Vergrößerung erforderlich sind, wenn festgestellt wird, daß der Projektor bei der gewünschten Vergrößerung mit in der bestimmten Lage befindlicher Objektivsitzplatte (40) fokussiert werden kann,

ii) oder die Objektivsitzplatte (40) relativ zum Objektivhalter (21) bewegen und den Objektivhalter und wenigstens einen von Bildvorlagehalter und Gestell zur Fokussierung des Projektors bei der gewünschten Vergrößerung bewegen, wenn festgestellt wird, daß der Projektor bei der gewünschten Vergrößerung mit in der bestimmten Stellung befindlicher Objektivsitzplatte (40) nicht fokussiert werden kann.

2. Photographischer Projektor nach Anspruch 1, bei welchem die Mittel die Objektivsitzplatte (40) auf den Bildvorlagehalter hin bewegen, wenn eine höhere Vergrößerung erforderlich ist.

3. Photographischer Projektor nach Anspruch 1, bei welchem die Mittel die Objektivsitzplatte (40) vom Bildvorlagehalter weg bewegen, wenn eine geringere Vergrößerung erforderlich ist.

4. Photographischer Projektor nach irgendeinem der Ansprüche 1, 2 und 3, bei welchem die Mittel zur Bestimmung der erforderlichen en für den Bildvorlagerahmen, den Objektivhalter, das Gestell und die Objektivsitzplatte (40) die gleiche Linsengleichung verwenden, wenn sich die Objectivsitzplatte (40) in der bestimmten Lage befindet und wenn die Objektivsitzplatte (40) sich außerhalb der bestimmten Lage befindet.

5. Verfahren zum Fokussieren eines photographischen Projektors bei einer gewünschten Vergrößerung, wobei bei dem Projektor ein Bildvorlagehalter zum Halten einer Bildvorlage, ein Objektivhalter (21) zum Halten eines Projektionsobjektivs und ein ein lichtempfindliches Material tragendes Gestell längs der optischen Achse des Projektionsobjektivs angeordnet sind, wobei der Objektivhalter in einer Richtung parallel zur optischen Achse zwischen einer obersten und untersten Stellung bewegbar ist, wobei eine Objektivsitzplatte (40) Teil des Objectivhalters bildet und das Objektiv (42) trägt, wobei die Objektivsitzplatte (40) das Objektiv (42) normalerweise in einer bestimmten Lage relativ zum Objektivhalter trägt, aber relativ zum Objektivhalter längs der Achse bewegbar ist, wobei das Verfahren dadurch gekennzeichnet ist, daß es die Verfahrensschritte des

Feststellens, ob der Projektor mit in der bestimmten Stellung befindlicher Objektivsitzplatte (40) bei einer bestimmten Vergrößerung fokussiert werden kann, und nachfolgend,

wenn die Antwort auf den Feststellungsschritt ein Ja ist, des Bewegens des Objektivhalters (21), bei in der bestimmten Stellung befindlicher Objektivsitzplatte (40), und wenigstens eines von Bildvorlagehalter und Gestell in Stellungen, die für eine Fokussierung des Projektors bei der gewünschten Vergrößerung erforderlich sind, oder,

wenn die Antwort auf den Feststellungsschritt ein Nein ist, des Bewegens der Objektivsitzplatte (40) relativ zum Objektivhalter (21) und Bewegens des Objektivhalters und wenigstens eines vom Bildvorlagehalter und Gestell in Stellungen, die für eine Fokussierung des Projektors bei der gewünschten Vergrößerung erforderlich sind, umfaßt.

6. Verfahren zum Fokussiern eines photographischen Projektors gemäß Anspruch 5, bei welchem die Objektivsitzplatte (40) auf den Bildvorlagehalter hin bewegt wird, wenn eine höhere Vergrößerung erforderlich ist.

7. Verfahren zum Fokussieren eines photographischen Projektors nach anspruch 5, bei welchem die Objektivsitzplatte (40) vom Bildvorlagehalter weg bewegt wird, wenn eine geringere Vergrößerung erforderlich ist.

8. Verfahren zum Fokussieren eines photographischen Projektors nach irgendeinem der Ansprüche 5, 6 und 7, bei welchem zur Bestimmung der erforderlichen Relativlagen von Objektivhalter, Bildvorlagehalter, Gestell und Objektivsitzplatte (40) die gleiche Linsengleichung verwendet wird, ob die Antwort auf den Feststellungsschritt ein Jà oder ein Nein ist.

**Revendications**

1. Projecteur photographique comprenant:

a) un support d'image originale destiné à maintenir une image formant original;

b) un support d'objectif (21) destiné à supporter un objectif de projection (42), le support d'objectif étant mobile dans une direction parallèle à l'axe optique de l'objectif entre une position extrême supérieure et une position extrême inférieure, une plaque d'embase d'objectif (40) formant partie du support d'objectif et supportant ledit objectif (42), la plaque d'embase d'objectif supportant normalement l'objectif dans une position prédéterminée par rapport au support d'objectif (21) mais étant mobile par rapport au support d'objectif le long dudit axe; et

c) un chevalet destiné à supporter un matériau photosensible dans un plan de reproduction, l'image originale, l'objectif et le plan de reproduction étant tous disposés le long dudit axe optique, caractérisé en ce qu'il comporte des moyens pour déterminer, lorsque la plaque d'embase d'objectif (40) est située à une position prédéterminée, si le projecteur peut être mis au point ou non pour un agrandissement voulu, lesdits moyens:

i) soit mettent en mouvement support d'objectif (21), ladite plaque d'embase d'objectif (40) étant située dans la position prédéterminée, et au moins un du support d'image originale et du chevalet jusqu'aux positions requises pour régler le projecteur selon l'agrandissement voulu, s'il est déterminé que le projecteur peut être réglé à l'agrandissement voulu lorsque la plaque d'embase d'objectif (40) est située à la position prédéterminée;

ii) soit mettent en mouvement la plaque d'embase d'objectif (40) par rapport au support d'objectif (21) et mettent en mouvement ledit support d'objectif et au moins un du support d'image originale et du chevalet pour régler le projecteur à l'agrandissement voulu s'il est déterminé que le projecteur ne peut pas être réglé à l'agrandissement voulu lorsque la plaque d'embase d'objectif (40) est située à la position prédéterminée.

2. Projecteur photographique selon la revendication 1, caractérisé en ce que lesdits moyens mettant en mouvement la plaque d'embase d'objectif (40) vers le support d'image originale lorsqu'un agrandissement supérieur est désiré.

3. Projecteur photographique selon la revendication 1, caractérisé en ce que lesdits moyens mettent en mouvement la plaque d'embase d'objectif (40) dans une direction l'éloignant du support d'image originale lorsqu'un agrandissement inférieur est désiré.

4. Projecteur photographique selon l'une quelconque des revendications 1, 2 ou 3, caractérisé en ce que lesdits moyens utilisent le même équation de lentille pour déterminer les emplacements voulus du support d'image originale, du support d'objectif, du chevalet et de la plaque d'embase d'objectif (40) lorsque ladite plaque d'embase d'objectif (40) est dans la position prédéterminée et lorsque la plaque d'embase d'objectif (40) est en dehors de la position prédéterminée.

5. Procédé de mise au point d'un projecteur photographique à un agrandissement voulu, projecteur dans lequel un support d'image originale destiné à supporter une image originale, un support d'objectif (21) destiné à supporter un objectif de projection et un chevalet supportant un matériau photosensible sont disposés le long de l'axe optique de l'objectif de projection, le support d'objectif étant mobile dans une direction parallèle audit axe optique entre une position extrême supérieure et une position extrême inférieure, une plaque d'embase d'objectif (40) formant partie du support d'objectif et supportant ledit objectif (42), la plaque d'embase d'objectif (40) supportant normalement l'objectif (42) en une position prédéterminée par rapport au support d'objectif mais étant mobile par rapport au support d'objectif le long dudit axe, le procédé étant caractérisé en ce qu'il comprend les étapes consistant à:

—déterminer si le projecteur peut être réglé à un grossissement voulu lorsque la plaque d'embase d'objectif (40) est située dans ladite position prédéterminée, puis

—si la réponse à l'étape de détermination est oui, mettre en mouvement le support d'objectif (21), la plaque d'embase d'objectif (40) étant dans la position prédéterminée, et au moins l'un du support d'image originale et de l'embase vers les positions requises pour mettre au point le projecteur à l'agrandissement voulu; ou

—si la réponse à l'étape de détermination est non, mettre en mouvement la plaque d'embase d'objectif (40) par rapport au support d'objectif (21) et mettre en mouvement le support d'objectif et au moins un du support d'image originale et du chevalet vers des positions requises pour mettre au point le projecteur à un agrandissement voulu.

6. Procédé pour mettre au point un projecteur photographique selon la revendication 4, caractérisé en ce que la plaque d'embase d'objectif (40) est mise en mouvement vers le support d'image originale lorsqu'un agrandissement supérieur est voulu.

7. Procédé pour mettre au point un projecteur photographique selon la revendication 5, caractérisé en ce que la plaque d'embase d'objectif (40) est mise en mouvement dans une direction l'éloignant du support d'image originale lorsqu'un agrandissement inférieur est désiré.

8. Procédé pour mettre au point un projecteur selon l'une quelconque des revendications 5, 6 ou 7, caractérisé en ce que la même équation de lentille est utilisée pour déterminer les positions relatives requises pour le support d'objectif, le support d'image originale, le chevalet et la plaque d'embase d'objectif (40), que la réponse à l'étape dé détermination sout oui ou non.

FIG. 1

# FIG . 2

# F I G . 3

(1)
```
DESIRED
MAGNIFICATION ($m_0$)
INPUTTING
```

```
MAGNIFICATION VALUE
CAPABLE OF BEING
PROJECTED BY A LENS SET
ON A STANDARD POINT
          MAXIMUM ($m_1$)
          MINIMUM ($m_2$)
```

(2)
```
COMPARING
```

(3)
$m_1 \geqq m_0 \geqq m_2$  —— NO

YES

(5)
$m_0 > m_1$  —— NO

YES

(6)
```
RAISING A LENS
SETTING PLATE
BY A DISTANCE
"S"
```

(8)
```
LOWERING A
LENS SETTING
PLATE BY A
DISTANCE "S"
```

(4)
```
a ——— a
b ——— b
```

(7)
```
a ——— (a − s)
b ——— (b + s)
```

(9)
```
a ——— (a + s)
b ——— (b − s)
```

```
LENS FOCAL
DISTANCE "f"
```

(10)
```
AUTOFOCUS OPERATING
a = f(1 + m_0)
b = f(1 + \frac{1}{m_0} )
```

$$a = f(1 + m_0)$$
$$b = f\left(1 + \frac{1}{m_0}\right)$$

(11)
```
CONTROLLING POSITIONS
OF AN ORIGINAL FRAME
AND A LENS SETTING PLATE
```

# FIG . 4

PRIOR ART

EP 0 196 663 B1

# F I G . 5

PRIOR ART

5